# EUROPÄISCHE PATENTANMELDUNG

(11) **EP 1 246 106 A2**
(43) Veröffentlichungstag der Anmeldung: **02.10.2002**
(21) Anmeldenummer: 02100210.0
(22) Anmeldetag: 01.03.2002
(51) Int. Cl.: G06F 17/60

(54) **Verfahren zur automatisierten Verwaltung von empfangenen Nachrichten**

(30) Priorität: 19.03.2001 DE 10113304
(71) Anmelder: SIEMENS AKTIENGESELLSCHAFT, 80333 München (DE)
(72) Erfinder: Bozionek, Bruno, 33178 Borchen (DE); Zimmermann, Rainer, 33106 Paderborn (DE)

(57) **Zusammenfassung**

Die vorliegende Erfindung bezieht sich auf ein Verfahren sowie ein Computersoftwareprogramm zur automatisierten Verwaltung von empfangenen Nachrichten, insbesondere von E-Mail-Nachrichten. Danach wird für eine E-Mail-Nachricht nach dem Öffnen ein Wiedervorlagetermin (S11), gegebenenfalls ein Prioritätskriterium (S12), sowie eine Kategorie (S14) vergeben. Die E-Mail-Nachricht wird wahlweise in einen zentralen Aufgabenordner oder gemäß der genannten Attribute in entsprechende Verzeichnisse abgelegt (S16).

## Beschreibung

Die vorliegende Erfindung bezieht sich auf ein Verfahren sowie ein Computersoftwareprogramm zur automatisierten Verwaltung von empfangenen Nachrichten, insbesondere von E-Mail-Nachrichten. Die Erfindung bezieht sich insbesondere auf ein Abspeichern und ein späteres automatisiertes Aufrufen empfangener Nachrichten gemäß bestimmter Kriterien.

In der Regel erhält ein Internet-Nutzer im Laufe eines Tages oder einer Woche eine Vielzahl von E-Mail-Nachrichten. Oftmals fehlt ihm jedoch die Zeit alle empfangenen E-Mail-Nachrichten sofort zu lesen, geschweige denn zu beantworten. Dies ist beispielsweise oft nach einer Dienstreise der Fall, während der sich eine Vielzahl von E-Mail-Nachrichten angesammelt haben.

Der Internet-Nutzer ist gezwungen alle E-Mail-Nachrichten zu öffnen und im Einzelfall zu entscheiden, welche er sofort, zu einem späteren Zeitpunkt, oder aber gar nicht beantworten will. Wenn der Nutzer sich dazu entschließt eine E-Mail-Nachricht erst zu einem späteren Zeitpunkt zu beantworten, muß er in der Regel für die entsprechende E-Mail-Nachricht manuell Schritt für Schritt eine sogenannte Aufgabe erstellen, in der er eine zeitliche Frist bis zur Wiedervorlage, gegebenenfalls ein Prioritätskriterium, sowie eine Kategorie und die E-Mail-Nachricht als Anhang beigefügt werden. Alternativ kann der Benutzer die E-Mail-Nachricht wieder als ungelesen markieren, oder manuell in einen Ordner für unbearbeitete Nachrichten kopieren. Dies ist umständlich und zeitraubend.

Aufgabe der vorliegenden Erfindung ist es, die Verwaltung von zu einem späteren Zeitpunkt zu beantwortenden Nachrichten zu vereinfachen.

Diese Aufgabe wird gemäß der Erfindung durch die Merkmale der unabhängigen Ansprüche gelöst. Die abhängigen Ansprüche bilden den zentralen Gedanken der Erfindung in vorteilhafter Weise weiter.

Es wird vorgeschlagen, einer gelesenen bzw. geöffneten Nachricht einen Wiedervorlagetermin zuzuweisen und anzuhängen, wobei der Wiedervorlagetermin angibt, wann der Leser die Nachricht zu beantworten plant. Die Nachricht wird anschließend automatisch als Aufgabe in einen Aufgabenordner überführt und dort einschließlich des angehängten Wiedervorlagetermins abgespeichert.

Bei der Nachricht handelt es sich vorzugsweise um eine E-Mail-Nachricht.

Dabei kann der Betreff der E-Mail-Nachricht automatisch als Aufgabentitel und die E-Mail-Nachricht selbst als Anhang in den Aufgabenordner abgespeichert werden.

Die entsprechend bearbeiteten und in dem Aufgabenordner abgespeicherten E-Mail-Nachrichten werden an dem entsprechenden zugewiesenen Wiedervorlagetermin erneut angezeigt.

Weiterhin kann einer E-Mail-Nachricht eine Beantwortungs-Prioritätsinformation zugewiesen werden. E-Mail-Nachrichten mit gleichem Wiedervorlagetermin sind somit in dem Aufgabenordner gemäß der zuvor zugewiesenen Beantwortungs-Prioritätsinformation anzeigbar.

Es soll aber auch möglich sein, daß sämtliche entsprechend bearbeitete E-Mail-Nachrichten - unabhängig von der zugewiesenen Datumsinformation - gemäß der zugewiesenen Beantwortungs-Prioritätsinformation in dem Aufgabenordner anzeigbar sind.

Ferner kann einer E-Mail-Nachricht eine Kategorieinformation (privat, geschäftlich, usw.) zugewiesen werden. Demgemäß sollen die E-Mail-Nachrichten auch gemäß dieser zuvor zugewiesenen Kategorieinformationen in dem Aufgabenordner anzeigbar sein.

Als Aufgabe gespeicherte E-Mail-Nachrichten werden generell in einem Ordner oder Unterordner gespeichert. Ob jedoch das Abspeichern abhängig von Kategorien, Prioritäten oder Wiedervorlageterminen in Unterordner oder in einem zentralen Ordner erfolgt ist optional, da über entsprechende Filter auch in einem zentralen Ordner verschiedene Sichten angeboten werden können: z.B. alle Aufgaben einer Kategorie, alle Aufgaben einer Priorität, etc.

Des weiteren wird ein Computersoftwareprogramm vorgeschlagen, das in Fällen, in denen es in den Speicher einer Datenverarbeitungseinrichtung geladen wird, ein Verfahren gemäß den oben beschriebenen Schritten ausführt.

Allerdings kann der Wiedervorlagemechanismus auch in ein bestehendes (Arbeitsgruppen-) Groupware-Programm (z.B. Microsoft Outlook) eingebracht werden.

Weitere Vorteile, Merkmale und Eigenschaften der vorliegenden Erfindung werden anhand eines Ausführungsbeispiels unter Bezugnahme auf die Zeichnungen näher erläutert.

Dabei zeigen:
- Fig. 1:: ein Flußdiagramm mit den bei einer automatisierten Verwaltung von empfangenen E-Mail-Nachrichten ablaufenden wesentlichen Verfahrensschritten; und
- Fig. 2:: eine geöffnete E-Mail-Nachricht in einem sogenannten Posteingang sowie dieselbe E-Mail-Nachricht abgelegt in einem Aufgabenordner.

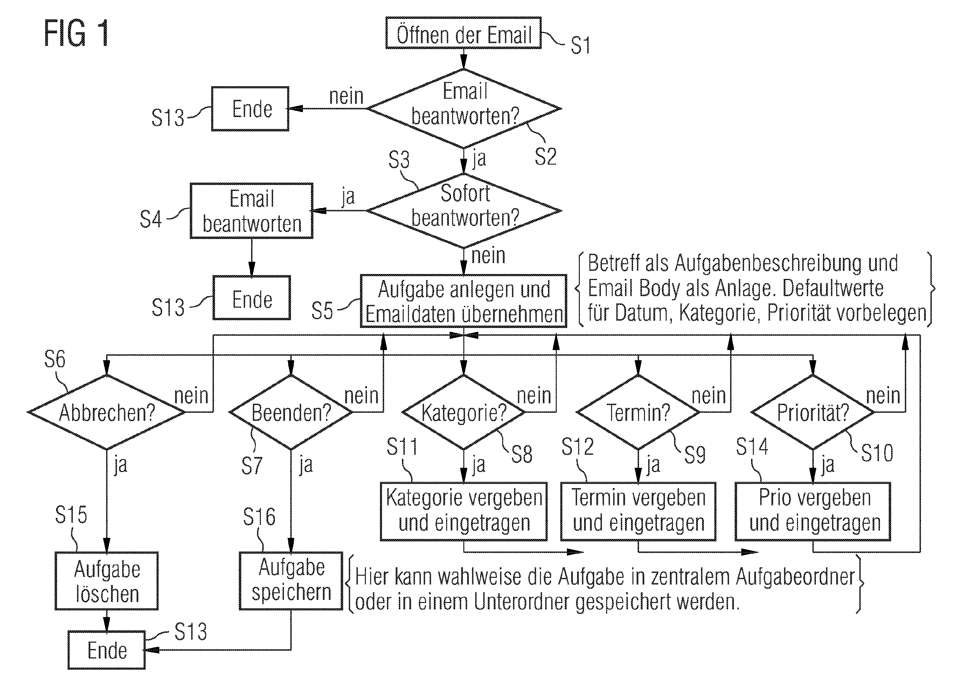

Bezugnehmend auf Fig. 1 wird in einem Schritt S1 eine empfangene E-Mail-Nachricht in einem Posteingangs-Ordner geöffnet, um sie zu lesen. In einem nächsten Schritt S2 wird entschieden, ob diese E-Mail-Nachricht beantwortet werden soll. Ist dies nicht der Fall, wird die E-Mail-Nachricht in einem Schritt S13 gelöscht oder verbleibt im Posteingangs-Ordner. Es sollte also dem Benutzer überlassen bleiben, ob nach einem Lesen und anschließenden Schließen der E-Mail-Nachricht diese gelöscht wird oder im Posteingangs-Ordner verbleibt.

Falls dagegen eine Antwort erfolgen soll, muß in einem Schritt S3 zuerst entschieden werden, ob die Antwort sofort oder erst zu einem späteren Zeitpunkt erfolgen soll. Die sofortige Beantwortung erfolgt in einem Schritt S4. Falls in Schritt S3 entschieden wird, daß die Beantwortung zu einem späteren Zeitpunkt erfolgen soll, muß an die E-Mail-Nachricht ein Kriterium vergeben werden, an dem sich eine spätere Wiedervorlage derselben orientiert. Dieses Kriterium kann ein Prioritätskriterium sein (z.B. eine hohe oder eine niedrige Priorität), eine Kategorie (privat, geschäftlich, etc.) oder aber ein Wiedervorlagetermin unter Berücksichtigung einer Uhrzeit und eines Datums.

Wird in Schritt S3 eine Option "später beantworten" gewählt, so wird automatisch eine Aufgabe angelegt, der Betreff der E-Mail-Nachricht als Aufgabenbeschreibung vorbelegt und die E-Mail-Nachricht als Anlage der Aufgabe angehängt.

Dabei können die entsprechenden Kriterien - Wiedervorlagetermin, Priorität und Kategorie - mit Default-Werten vorbelegt werden. Sinnvoll ist dies insbesondere bei einem Wiedervorlagetermin der - beispielsweise mit drei Tagen vorbelegt-grundsätzlich drei Tage nach Öffnen der E-Mail-Nachricht eine Wiedervorlage E-Mail-Nachricht veranlaßt.

Die vorbelegten Default-Werte für ein entsprechendes Kriterium können in Schritten S8 bis S10 jedoch auch manuell geändert werden. Soll nach Bestätigung in Schritt S8 eine Kategorie vergeben werden, so erfolgt dies in einem Schritt S11. Im Falle einer Entscheidung für einen Wiedervorlagetermin in Schritt S9 werden in einem Schritt S12 in die Aufgabe Zeit und Datum der Wiedervorlage eingetragen. Nach einer Entscheidung für eine Priorität in Schritt S10 wird diese in einem Schritt S14 vergeben.

Der Benutzer kann sich in einem Schritt S6 jederzeit für ein Abbrechen des Vorganges entscheiden und in einem Schritt S15 die in Schritt S5 angelegte Aufgabe löschen.

Er kann sich aber auch - was dem Normalfall entspricht - in einem Schritt S7 für ein ordnungsgemäßes Beenden des Vorganges entscheiden und in einem Schritt S16 die Aufgabe wahlweise in einem zentralen Aufgabenordner oder in einem Unterordner abspeichern. Sofern ein zentraler Aufgabenordner benutzt wird, kann dies ein eigens angelegter Ordner, oder ein standardmäßig eingerichteter Aufgabenordner des Benutzers sein.

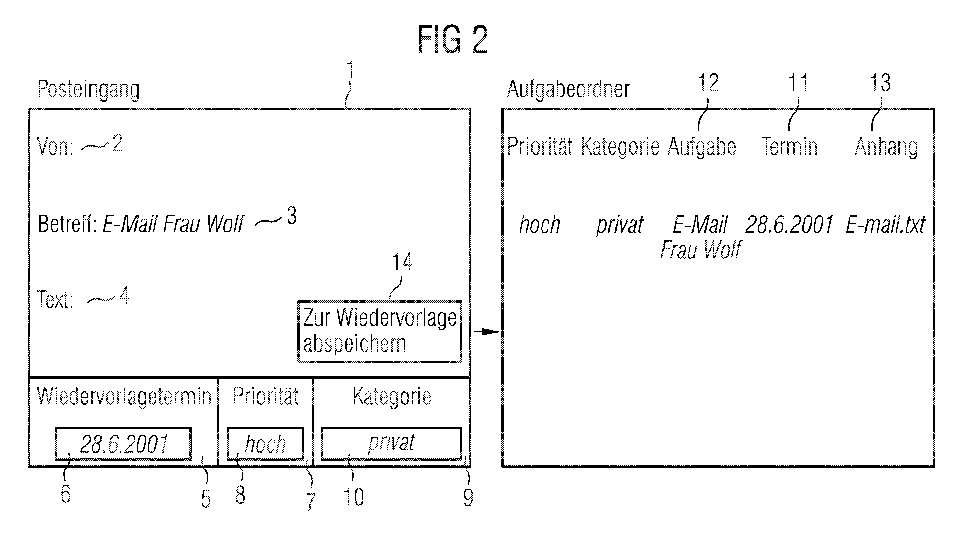

In Fig. 2 ist die in einem geeigneten Posteingangsfenster 1 zum Lesen geöffnete E-Mail-Nachricht dargestellt. In einem oberen Abschnitt 2 ist ein Absender 2 der E-Mail-Nachricht angegeben. Darauf folgt ein Betreff 3 - im vorliegenden Ausführungsbeispiel "E-Mail Frau Wolf" - und schließlich fügt sich der eigentliche Text 4 der E-Mail-Nachricht an. Erfindungsgemäß befinden sich in einer am unteren Rand des Fensters befindlichen Menueleiste die durch Schaltflächen - in der Literatur häufig als 'Buttons' bezeichnet - zuweisbaren Kriterien: Wiedervorlagetermin 5, Priorität 7 und Kategorie 9. Zusätzlich enthält die Menueleiste eine Schaltfläche 14 zum Abspeichern der E-Mail-Nachricht in einen zentralen Aufgabenordner oder in einen den zugewiesenen Kriterien entsprechenden Unterordner.

Die Schaltflächen 5,6 und 7 in der unteren Menueleiste enthalten zu den entsprechenden Kriterien die zugehörigen Eingabefenster 6, 8, 10. Beispielsweise ist im vorliegenden Ausführungsbeispiel die Wiedervorlage fällig am 28.6.2001, die Nachricht hat hohe Priorität und ist privater Natur.

Die Eingabe mindestens eines Kriteriums zur Wiedervorlage-vorteilhafterweise des Wiedervorlagetermins - ist notwendig, um die E-Mail-Nachricht durch Betätigen der Schaltfläche 14 in einen Aufgabenordner 11 abzuspeichern. Dabei wird der Betreff der ursprünglich eingegangenen E-Mail-Nachricht automatisch zur Aufgabenbezeichnung 12 verwendet. Der Text dieser E-Mail-Nachricht wird in Form einer Text-Datei 13 an den Aufgabenordner angehängt.

Bei Eingabe zusätzlicher Wiedervorlagekriterien (z.B. Priorität und Kategorie) kann der entsprechende Aufgabenordner 11 in die den Kriterien entsprechende Unterordner abgelegt werden.

Wird der Mechanismus für die Übernahme der E-Mail-Nachricht in eine Aufgabe z.B. in einem Groupware-Programm wie Microsoft Outlook realisiert, so können alle anderen standardmäßig von diesem Programm angebotenen Funktionen (beispielsweise Weiterleiten der Aufgabe an einen beliebigen E-Mail-Nutzer) genutzt werden.

Somit entfällt das umständliche manuelle Aufrufen von Kriterien-Vergabefunktionen zur Charakterisierung eingegangener E-Mail-Nachrichten um diese entsprechend sortiert verwalten zu können.

## Patentansprüche

1. Verfahren zur Verwaltung von empfangenen Nachrichten, aufweisend die folgenden Schritte:
- Anlegen einer Aufgabe in einem Aufgabenordner und Übernahme von Daten einer gelesenen Nachricht in diesen
Aufgabenordner (S3),
- automatisches Vorbelegen und Anhängen von Kriterien:
- Wiedervorlagetermin und/oder
- Beantwortungs-Prioritätsinformation und/oder
- Kategorie-Information
mit Defaultwerten (S5), wobei der Wiedervorlagetermin angibt, wann der Leser die Nachricht zu beantworten plant, und
- Automatisches Überführen und Abspeichern der Nachricht einschließlich der angehängten Kriterien in einen zentralen Aufgabenordner oder in einen Unterordner (S16).

2. Verfahren nach Anspruch 1,
**dadurch gekennzeichnet,**
**dass** die Defaultwerte für die Kriterien geändert werden.

3. Verfahren nach Anspruch 1 oder 2,
**dadurch gekennzeichnet,**
**dass** die Nachricht eine E-Mail-Nachricht ist.

4. Verfahren nach Anspruch 3,
**dadurch gekennzeichnet,**
**dass** automatisch der Betreff der E-Mail-Nachricht als Aufgabentitel und die E-Mail-Nachricht als Anhang in den Aufgabenordner abgespeichert werden.

5. Verfahren nach Anspruch 3 oder 4,
**dadurch gekennzeichnet,**
**dass** die entsprechend bearbeiteten und abgespeicherten E-Mail-Nachrichten in dem Aufgabenordner entsprechend des zugewiesenen Wiedervorlagetermins angezeigt werden.

6. Verfahren nach einem der Ansprüche 3 bis 5,
**dadurch gekennzeichnet,**
**dass** die E-Mail-Nachrichten mit gleichem Wiedervorlagetermin gemäß der zugewiesenen Beantwortungs-Prioritätsinformation in dem Aufgabenordner angezeigt werden.

7. Verfahren nach Anspruch 3 oder 4,
**dadurch gekennzeichnet,**
**dass** die E-Mail-Nachrichten unabhängig von der zugewiesenen Datumsinformation gemäß der zugewiesenen Beantwortungs-Prioritätsinformation in dem Aufgabenordner angezeigt werden.

8. Verfahren nach Anspruch 3 oder 4,
**dadurch gekennzeichnet,**
**dass** die E-Mail-Nachrichten gemäß der zugewiesenen Kategorieinformation in dem Aufgabenordner angezeigt werden.

9. Computersoftwareprogramm,
**dadurch gekennzeichnet,**
**dass** es ein Verfahren nach einem der vorhergehenden Ansprüche ausführt, wenn es in den Speicher einer Datenverarbeitungseinrichtung geladen ist.
